# EUROPÄISCHE PATENTSCHRIFT

(11) **EP 0 801 237 B1**
(45) Veröffentlichungstag und Bekanntmachung des Hinweises auf die Patenterteilung: **11.08.1999**
(21) Anmeldenummer: 97105886.2
(22) Anmeldetag: 10.04.1997
(51) Int. Cl.: F16C 3/12, F16D 1/09, F02B 75/16, F16D 1/05, F16C 3/06

(54) **Kurbelwelle, insbesondere für Einzylinder-Verbrennungs-motoren**
Crankshaft, especially for single-cylinder internal-combustion engines
Vilebrequin, en particulier pour moteur à combustion interne monocylindre

(30) Priorität: 13.04.1996 DE 19614677
(43) Veröffentlichungstag der Anmeldung: 15.10.1997
(73) Patentinhaber: Motorenfabrik Hatz GmbH & Co. KG, 94099 Ruhstorf (DE)
(72) Erfinder: Eder, Erich, 94152 Vornbach/Inn (DE)
(74) Vertreter: Grättinger & Partner (GbR)

(56) Entgegenhaltungen:
- EP-A- 0 482 929
- DE-C- 541 417
- FR-A- 690 609

## Beschreibung

Die Erfindung betrifft eine Kurbelwelle, insbesondere für Einzylinder-Verbrennungsmotoren, mit einem abtriebseitigen Aufnahmeende für austauschbare Wellenzapfen, wobei das Aufnahmeende ein Innengewinde aufweist und im Kurbelgehäuse gelagert ist.

Speziell bei Einzylinder-Hubkolbenmotoren im Hubraumbereich unter 500 cm³ ist es übliche Praxis, die Motoren mit einteiligen Kurbelwellen anzufertigen, deren abtriebseitiger Wellenzapfen für die jeweilige Applikation geeignet ausgebildet ist. Dies ist zwar eine kostengünstige Gesamtlösung; diese läßt sich aber weder an spätere Änderungswünsche anpassen noch ermöglicht sie herstellerseitig eine großzügige Lagerfertigung. Wünscht ein Anwender einen speziellen Wellenzapfen, so ist der Hersteller gezwungen, um diesen herum einen neuen Motor zu bauen. In der Praxis besteht also das Bedürfnis, einerseits die Vorratshaltung von Lagermotoren zu vereinfachen, andererseits eine beliebige Anzahl unterschiedlicher Wellenzapfen anbieten zu können. Auf der Abnehmerseite kann noch der Wunsch hinzukommen, den abtriebseitigen Wellenzapfen für eine andere Applikation austauschen zu können.

Für einen Standardmotor wurde bereits die Idee verwirklicht, die Kurbelwelle abtriebseitig mit einem austauschbaren Wellenzapfen zu versehen und die Verbindung derart auszubilden, daß der Wellenzapfen bei geschlossenem Kurbelgehäuse austauschbar ist (DE-B1-1287371). Zu diesem Zweck wird der Wellenzapfen mit seinem Anschlußende in einem Sitz der Kurbelwange befestigt. Dieser Sitz kann entweder als Kegelpreßsitz oder als geklemmte Kerbverzahnung ausgebildet sein. Die Kurbelwelle kann auch einen axialen Ansatz aufweisen, mit welchem das zugeordnete Anschlußende des Wellenzapfens über eine spielfreie Axialkupplung verbunden ist. Der Wellenzapfen weist eine Bohrung für eine Paßschraube auf, die zu dessen Befestigung in ein Innengewinde des Ansatzes einschraubbar ist. Der Zentrierung des Wellenzapfens dient ein an der Stirnfläche des Ansatzes vorgesehener Zentrierring. Bei der bekannten Lösung sind zur Verbindung des Wellenzapfens mit dem Ansatz somit neben einer Axialkupplung ein Zentrierring und eine Paßschraube erforderlich. Des weiteren beschreibt die EP 0482929 ein mit einem spitzen Kegelwinkel und einem Schraubgewinde versehenes Anbauwellenende, welches bei Auslieferung des Motors zu Transportzwecken demontiert sein kann. Nach der Montage "frißt" der Kegel entsprechend seinem flachen Kegelwinkel im Sitz der Kurbelwelle und erzeugt so eine praktische unlösbare Verbindung.

Dem gegenüber liegt der vorliegenden Erfindung die Aufgabe zugrunde, das abtriebseitige Ende der Kurbelwelle so auszubilden, daß in dieses unterschiedliche Wellenzapfen eingesetzt werden können, welche mit bekannten Kurbelwellenenden bau-, längen- und funktionsgleich sind. Die Verbindung zwischen dem Aufnahmeende der Kurbelwelle und den Wellenzapfen soll möglichst einfach gestaltet, muß aber exakt zentrisch sein und darf unter motorischer Drehmoment- und Schwingungsbelastung nicht lösbar sein. Die Verbindung darf sich z. B. beim Auspendeln des Motors nicht lösen. Die Verbindung soll jedoch mit einfachen Werkzeugen herstellbar und wieder lösbar sein, damit die Wellenzapfen ausgetauscht werden können.

Diese Aufgabe wird erfindungsgemäß durch die Merkmale des Anspruchs 1 gelöst.

Bei einer derartigen Gestaltung des Anschlußendes der Wellenzapfen erübrigen sich weitere Befestigungselemente. Jeder derartige Wellenzapfen, gleichgültig wie dessen Anbauabschnitt ausgebildet ist, wird mittels der Gewindeverbindung derart fest in das hohle Aufnahmeende der Kurbelwelle eingeschraubt bis ein Anziehdrehmoment erreicht wird, welches die erforderliche Vorspannkraft für den Kegelsitz zwischen dem kurbelwellenseitigen Aufnahmekonus und dem Anschlußkegel des Wellenzapfens entsprechend dem geforderten Belastungspektrum erzeugt. Dabei entsprechen das Innengewinde der Kurbelwelle und das Außengewinde des Wellenzapfens sowie der Aufnahmekonus der Kurbelwelle und der Anschlußkegel des Wellenzapfens einander.

Dabei versteht sich von selbst, daß die Wahl der Gewinderichtung, also ob ein Rechts- oder ein Linksgewinde gewählt wird, von der Motordrehrichtung abhängt, derart, daß die Motordrehrichtung gegen die Schraubrichtung beim Anziehen der Gewindeverbindung gerichtet ist.

Der Kegelwinkel des Kegelsitzes ist so abzustimmen, daß er einerseits mit üblichen Werkzeugen hergestellt und wieder gelöst werden kann, andererseits die erforderlichen axialen Toleranzen eingehalten werden.

Zur Montage des Wellenzapfens ist vorgesehen, daß er zwischen seinem Anschlußende und seinem Anbauabschnitt ein Schlüssel-Außenprofil aufweist oder daß er ein von seinem anbauseitigen Ende zugängliches Schlüssel-Hohlprofil aufweist. Das Anbauen eines Wellenzapfens bzw. der Austausch eines Wellenzapfens kann auf diese Weise einfach und schnell erfolgen. Es hat sich gezeigt, daß das Lösemoment stets über dem Anziehmoment liegt, was ohne weiteres erklärlich ist, da die Verbindung durch die Massenträgheit der Abtriebseite bzw. das abgenommene Drehmoment im Einsatz zunehmend festgezogen wird.

Bezüglich weiterer Ausgestaltungen der Erfindung wird auf die Ansprüche 5 bis 7 verwiesen.

Durch die Erfindung wird ein Wellenzapfen geschaffen, der für jede Applikation geeignet ausgestaltet sein kann, z. B. nach den bekannten Standards für den Anbau von Hydraulikpumpen, Wasserpumpen, Fliehkraftkupplungen, Keilriemenscheiben, elastischen Kupplungen, Generatoren, beliebigen Abtriebsflanschen oder dgl.

Im folgenden werden verschiedene Ausführungsformen der Erfindung anhand der Zeichnung erläutert. Es zeigt
- Fig. 1: das anbauseitige Aufnahmeende der Kurbelwelle,
- Fig. 2: einen zylindrischen Wellenzapfen mit Gewinde, z. B. für den Anbau einer Wasserpumpe,
- Fig. 3: einen zylindrischen Wellenzapfen mit Keilnut und stirnseitigem Innengewinde,
- Fig. 4: einen Wellenzapfen mit Kegel,
- Fig. 5: einen Wellenzapfen als Hohlwelle in Form eines Abtriebsflansches in der Anbauposition,
- Fig. 6: einen Wellenzapfen als Hohlwelle mit Innengewinde für den Anbau einer Hydraulikpumpe und
- Fig. 7: einen Wellenzapfen als Hohlwelle in Form einer Fliehkraftkupplung.

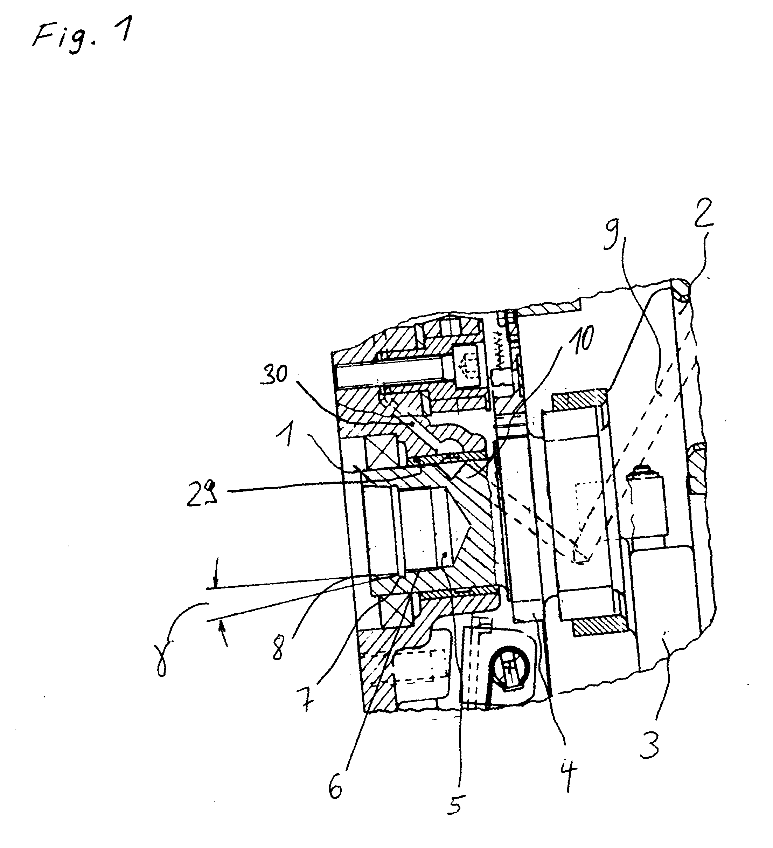

In Fig. 1 ist das abtriebseitige Aufnahmeende 1 der Kurbelwelle 2, teilweise im Axialschnitt, dargestellt. Zwischen Kurbelwange 3 und Aufnahmeende 1 ist eine Stirnverzahnung 4 zur Betätigung der Nockenwelle dargestellt. Die Lagerung des Aufnahmeendes 1 im Kurbelgehäuse umfaßt eine Gleitlagerbuchse 29, welche an einen oberen Schmierölkanal 30 angeschlossen ist. Auf der Innenseite der Buchse mündet ein unterer Schmierölkanal 10, dessen nach oben führender Zweig 9 zum Hubzapfenlager führt.

Das Aufnahmeende 1 ist zur Aufnahme verschiedener Wellenzapfen hohl ausgebildet. An eine Bohrung 5, die lediglich herstellungsbedingt ist, schließt sich in axialer Richtung nach außen hin ein als Feingewinde ausgebildetes Innengewinde 6 an. Über eine Auslaufnut 7 schließt sich daran ein Aufnahmekonus 8 an, dessen halber Kegelwinkel γ etwa 7,5° beträgt.

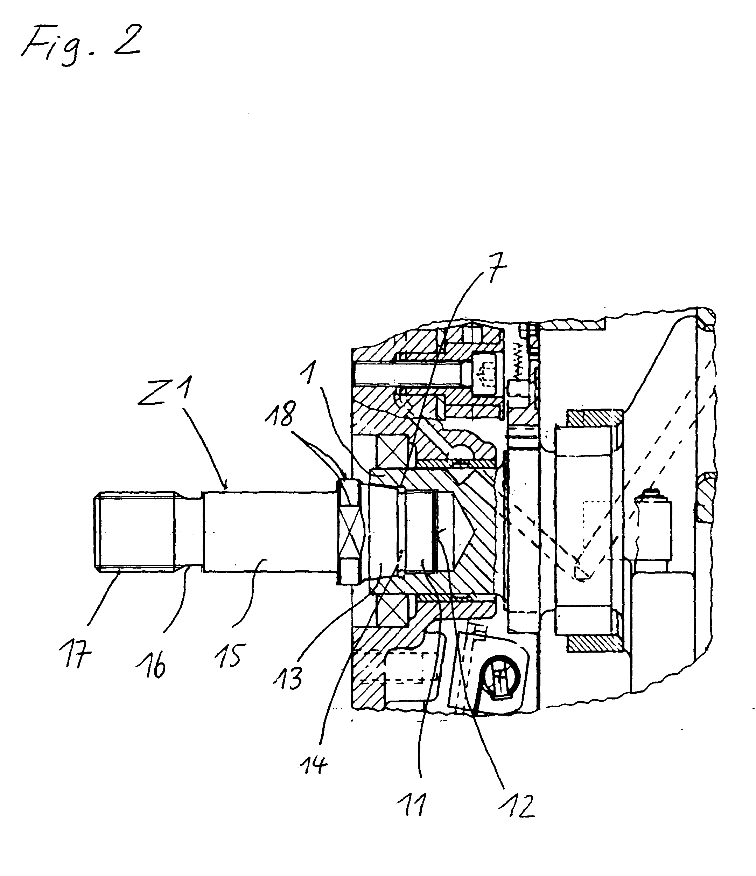

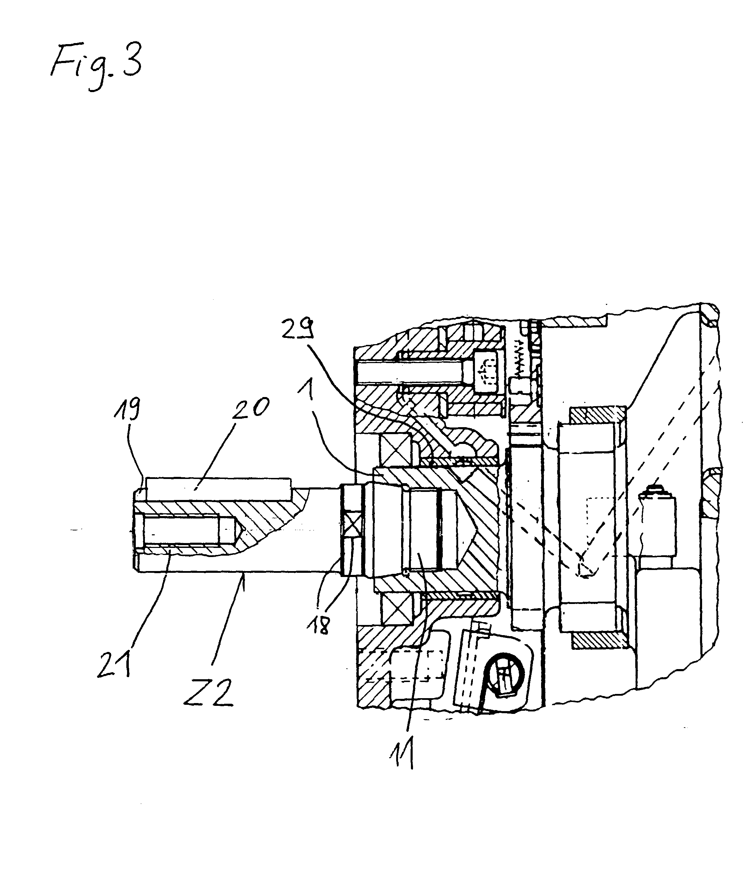

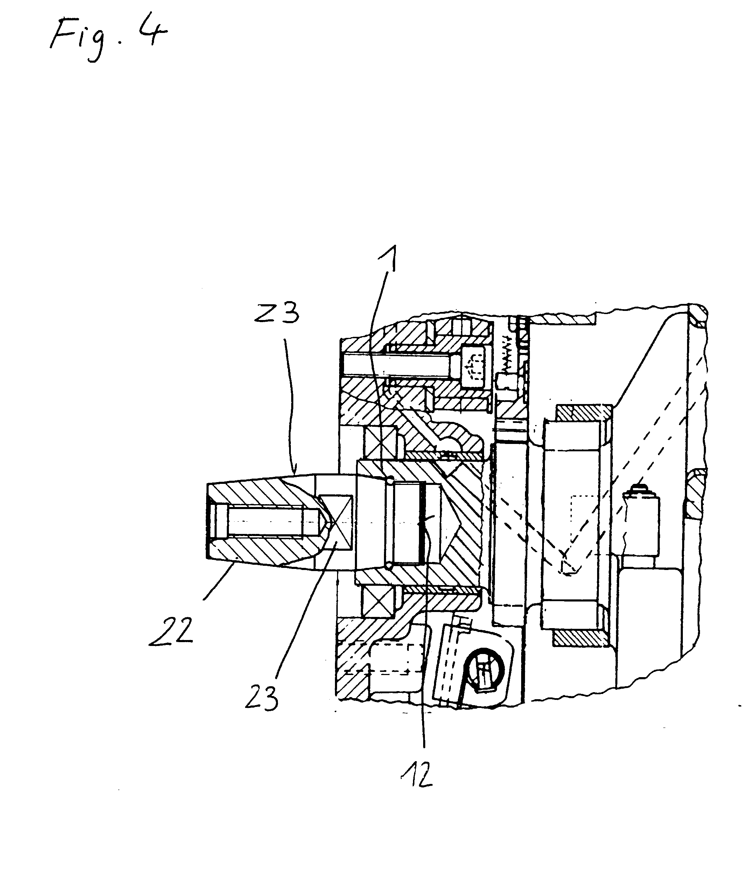

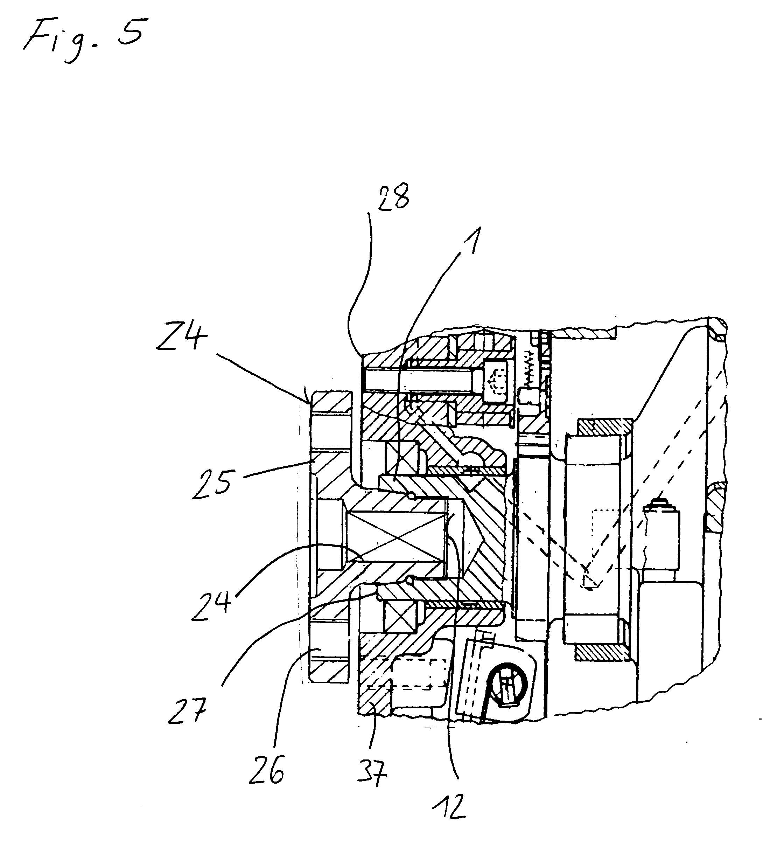

Fig. 2 zeigt einen zylindrischen, in das Aufnahmeende 1 eingesetzten Wellenzapfen Z1. Das Außengewinde 11 seines Anschlußendes 12 ist in das Innengewinde 6 des Aufnahmeendes 1 der Kurbelwelle 2 eingeschraubt, so daß eine feste, bei Bedarf wieder lösbare Verbindung zwischen dem Anschlußkegel 13 des Anschlußendes 12 und dem Aufnahmekonus 8 des Aufnahmeendes 1 verwirklicht ist. Auch das Anschlußende 12 besitzt im Übergangsbereich zwischen dem Außengewinde 11 und dem Anschlußkegel 13 eine umlaufende Auslaufnut 14. Deren axiale Höhe stimmt mit derjenigen der Auslaufnut 7 des Aufnahmeendes 1 überein.

Der Wellenzapfen Z1 besitzt einen zylindrischen Wellenabschnitt 15, an welchen sich in axialer Richtung nach links hin eine Eindrehung 16 und ein Gewindezapfen 17 mit Außengewinde anschließen. Ein derartiger Wellenzapfen eignet sich beispielsweise für den Anschluß einer Wasserpumpe. Das Eindrehen bzw. Lösen des Wellenzapfens erfolgt mittels eines Drehmomentschlüssels, der über ein Schlüssel-Anschlußprofil 18 gesteckt wird, welches unmittelbar benachbart der Stirnseite des Aufnahmeendes 1 vorgesehen ist.

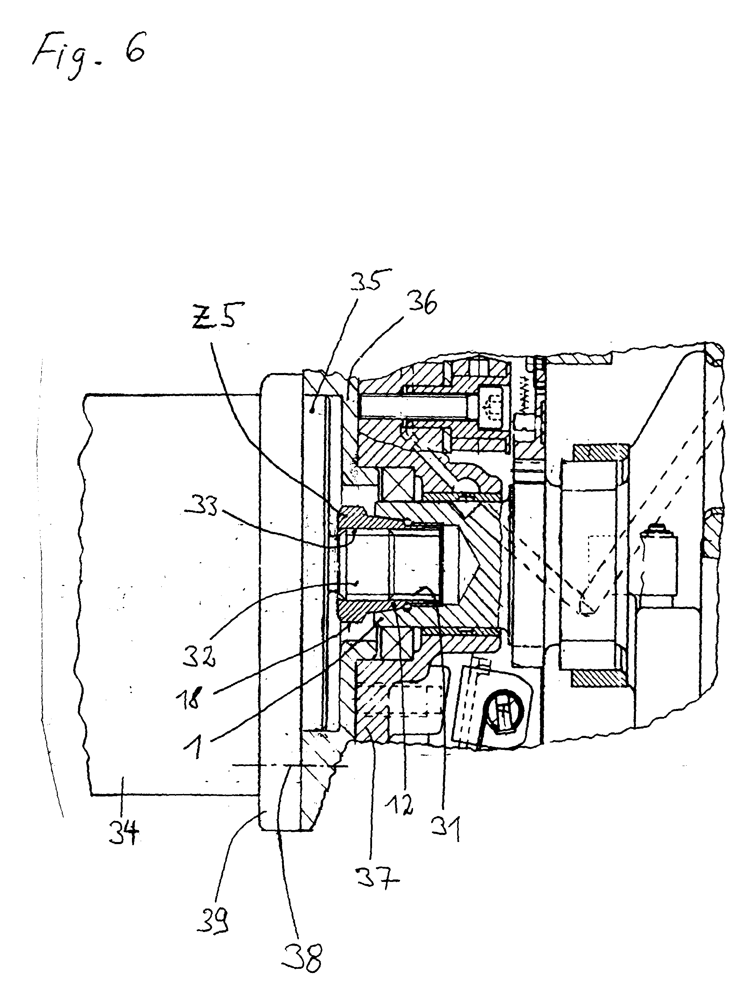

Der in Fig. 3 dargestellte Wellenzapfen Z2 besitzt einen zylindrischen Anbauabschnitt mit Keilnut 19, über deren Keil 20 ein nicht dargestellter Maschinenteil antreibbar ist. Dieser Maschinenteil wird mittels einer Befestigungsschraube axial auf dem Wellenzapfen Z2 fixiert, welche in das stirnseitig eingebrachte Innengewinde 21 eingeschraubt wird. Die Anschlußseite des Wellenzapfens Z2 ist wie zu Fig. 2 beschrieben ausgestaltet.

Fig. 4 zeigt einen Wellenzapfen Z3 mit einem Kegel 22, der einen Kegelwinkel im Verhältnis 1:5 aufweist. Auch hier handelt es sich um einen Standardwellenzapfen. Dadurch, daß dessen Anschlußende 12 wie bei dem vorangehenden Ausführungsbeispielen im Hohlteil des Aufnahmeendes 1 aufgenommen ist, ergibt sich die gleiche Baulänge wie bei den bekannten Lösungen, bei welchen der Wellenzapfen einteilig mit der Kurbelwelle verbunden ist. Ein an das Aufnahmeende 1 anschließender Abschnitt des Wellenzapfens Z3 besitzt eine aufgebrachte Schlüsselweite 23.

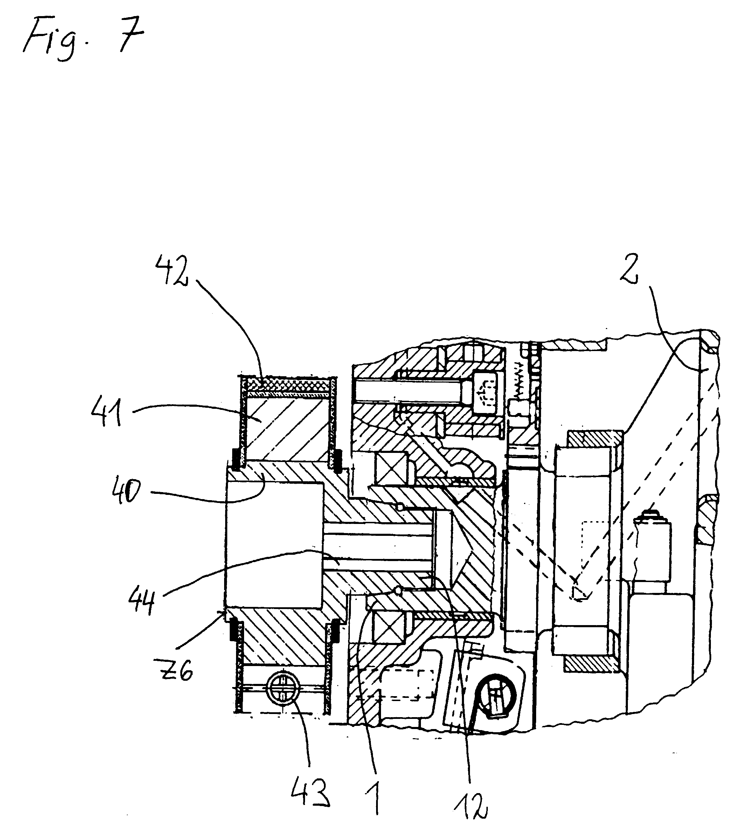

Gemäß Fig. 5 ist ebenfalls im Axialschnitt ein weiterer Wellenzapfen Z4 in Form eines Abtriebsflansches dargestellt. Dieser Wellenzapfen Z4 ist als Hohlwelle ausgebildet, deren Hohlraum ein Vierkantprofil 24 beschreibt. Dieses dient dem Eingriff eines Schlüssels zum Eindrehen bzw. Lösen des Wellenzapfens Z4 bezüglich des Aufnahmeendes 1 der Kurbelwelle 2. Der Wellenzapfen Z4 besitzt eine Flanschscheibe 25 mit über den Umfang verteilt angeordneten Bohrungen 26 für den Anbau eines beliebigen Maschinenteils. Aufnahmeende 1 und Anschlußende 12 des Wellenzapfens Z4 sind wiederum in der gleichen Weise ausgebildet, wie zu den voranstehenden Wellenzapfen Z1 bis Z3 beschrieben.

In Fig. 5 erkennt man sehr deutlich, daß der austauschbare Wellenzapfen Z4 gegenüber den bekannten gleichartigen Lösungen zu keiner Verlängerung der Baulänge führt. Ursächlich ist hierfür nicht nur die hohle Ausbildung des Aufnahmeendes 1 der Kurbelwelle sondern auch die entsprechend kurze Bemessung des Aufnahmeendes 1 in axialer Richtung, dessen Stirnseite 27 deutlich hinter die Außenseite 28 des Kurbelgehäuses zurücktritt.

Fig. 6 zeigt einen weiteren Wellenzapfen Z5, wie er für den Anbau einer Hydraulikpumpe üblich ist. Der Wellenzapfen Z5 ist als Hohlwelle mit einem Innenkeilprofil 31 zur Aufnahme eines Pumpenanschlußzapfens 32 mit Außenkeilverzahnung 33 ausgebildet. Der Wellenzapfen Z5 besitzt ebenfalls ein Schlüsselaußenprofil 18. Aufnahmeende 1 und Anschlußende 12 des Wellenzapfens Z5 sind wie zu den oben beschriebenen Ausführungsformen ausgebildet. Das Pumpengehäuse 34 besitzt einen Anschlußzentrieransatz 35, der in einen am Kurbelgehäuse 37 festen Zwischenflansch 36 eingreift. Mit der strichpunktierten Mittellinie 38 ist eine Verschraubung zwischen dem Flanschring 39 des Pumpengehäuses 34 und dem Zwischenflansch 36 angedeutet.

Fig. 7 zeigt einen Wellenzapfen Z6 in Form einer Fliehkraftkupplung mit Kupplungskörper 40, Fliehgewicht 41, Reibbelag 42 und die Einschaltdrehzahl vorgebendem Federpaket 43. Der Kupplungskörper 40 ist als Hohlwelle mit einem Innensechskantprofil 44 ausgebildet, welches für den Eingriff eines entsprechend ausgebildeten Eindrehwerkzeuges zum Eindrehen des Wellenzapfens Z6 in das Aufnahmeende 1 vorgesehen ist. Zudem kann das Innensechskantprofil 44 für den Anschluß eines (nicht dargestellten) drehmomentübertragenden Kupplungsglieds mit einsprechendem Außensechskantprofil dienen. Aufnahmeende 1 der Kurbelwelle 2 und Anschlußende 12 des Wellenzapfens Z6 sind wie zu den oben beschriebenen Ausführungsformen ausgebildet.

## Patentansprüche

1. Kurbelwelle für einen Verbrennungsmotor, insbesondere einen Einzylinder-Verbrennungsmotor, mit einem abtriebseitigen Aufnahmeende (1) für einen austauschbaren Wellenzapfen (Z), wobei die Kurbelwelle im Kurbelgehäuse gelagert ist und wobei das Aufnahmeende (1) ein Innengewinde (6) mit einer der Motordrehrichtung entgegengesetzten Eindrehrichtung und einen axial daran anschließenden Aufnahmekonus (8) aufweist, so daß ein ein Außengewinde (11) und einen Anschlußkegel (13) aufweisendes Anschlußende (12) eines Wellenzapfens (Z) darin aufnehmbar ist,
dadurch gekennzeichnet,
daß das Innengewinde (6) als Feingewinde ausgebildet ist und daß der Kegelwinkel des Aufnahmekonus für den Preßsitz zwischen Aufnahmekonus (8) und Anschlußkegel (13) zwischen 12° und 20° beträgt.

2. Kurbelwelle nach Anspruch 1,
dadurch gekennzeichnet,
daß die Feingewindesteigung zwischen 0,5 mm und 1,5 mm beträgt.

3. Kurbelwelle nach Anspruch 1,
dadurch gekennzeichnet,
daß Innengewinde (6) und
Aufnahmekonus (8) durch eine umlaufende Auslaufnut (7) getrennt sind.

4. Wellenzapfen zur Aufnahme in einem Aufnahmeende einer Kurbelwelle nach Anspruch 1,
dadurch gekennzeichnet,
daß der Wellenzapfen (Z4) ein von seinem anbauseitigen Ende zugängliches SchlüsselHohlprofil (24) aufweist.

5. Wellenzapfen zur Aufnahme in einem Aufnahmeende einer Kurbelwelle nach Anspruch 1,
dadurch gekennzeichnet,
daß der Wellenzapfen zwischen seinem Anschlußende (12) und seinem Anbauabschnitt ein Schlüssel-Außenprofil (18) aufweist.

6. Wellenzapfen zur Aufnahme in einem Aufnahmeende einer Kurbelwelle nach Anspruch 1,
dadurch gekennzeichnet,
daß der Wellenzapfen (Z4) als Hohlwelle ausgebildet ist.

7. Wellenzapfen zur Aufnahme in einem Aufnahmeende einer Kurbelwelle nach Anspruch 1,
dadurch gekennzeichnet,
daß der Wellenzapfen (Z2) an seinem anbauseitigen Ende ein Innengewinde (21) für eine Befestigungsschraube aufweist.

## Claims

1. Crankshaft for an internal combustion engine, in particular a single-cylinder internal combustion engine, with a receiving end (1) on the output side, for an exchangeable shaft journal (Z), the crankshaft being mounted in the crankcase and the receiving end (1) comprising an internal thread (6) with a feed direction opposing the direction of rotation of the engine and an axially adjoining receiving cone (8), so that a connection end (12) of a shaft journal (Z) comprising an external thread (11) and a connection cone (13) can be received therein, characterised in that the internal thread (6) is constructed as a fine thread and that the cone angle of the receiving cone for the press fit between the receiving cone (8) and connection cone (13) amounts to between 12° and 20°.

2. Crankshaft according to Claim 1, characterised in that the fine thread pitch amounts to between 0.5 mm and 1.5 mm.

3. Crankshaft according to Claim 1, characterised in that the internal thread (6, 11) and receiving cone (8) are separated by a peripheral run-out groove (7).

4. Shaft journal for being received in a receiving end of a crankshaft according to Claim 1, characterised in that the shaft journal (Z4) has a spanner hollow profile (24) accessible from its mounting end.

5. Shaft journal for being received in a receiving end of a crankshaft according to Claim 1, characterised in that the shaft journal has a spanner outer profile (18) between its connection end (12) and its mounting section.

6. Shaft journal for being received in a receiving end of a crankshaft according to Claim 1, characterised in that the shaft journal (Z4) is constructed as a hollow shaft.

7. Shaft journal for being received in a receiving end of a crankshaft according to Claim 1, characterised in that at its mounting end the shaft journal (Z2) comprises an internal thread (21) for a fastening screw.

## Revendications

1. Vilebrequin pour un moteur à combustion interne, en particulier pour un moteur à combustion interne monocylindre, comprenant une extrémité femelle (1) pour un bout d'arbre (Z) échangeable côté sortie de puissance, le vilebrequin étant monté dans le carter moteur et l'extrémité femelle (1) comportant un filetage intérieur (6) dont le sens de vissage est opposé au sens de rotation du moteur ainsi qu'un cône femelle (8) axial disposé à la suite de manière à pouvoir recevoir une extrémité mâle (12) d'un bout d'arbre (Z) munie d'un filetage extérieur (11) et d'un cône mâle (13), caractérisé par le fait que le filetage intérieur (6) est un filetage fin et par le fait que l'angle de cône du cône femelle, pour l'assemblage serré entre le cône femelle (8) et le cône mâle (13), est compris entre 12° et 20°.

2. Vilebrequin selon la revendication 1, caractérisé par le fait que le pas du filetage fin est compris entre 0,5 mm et 1,5 mm.

3. Vilebrequin selon la revendication 1, caractérisé par le fait que le filetage intérieur (6) et le cône femelle (8) sont séparés par une gorge de dégagement (7) circulaire.

4. Bout d'arbre destiné à être monté sur une extrémité femelle d'un vilebrequin selon la revendication 1, caractérisé par le fait que le bout d'arbre (Z4) comporte un profil en creux (24) pour une clé, qui est accessible à partir de son extrémité réceptrice.

5. Bout d'arbre destiné à être monté sur une extrémité femelle d'un vilebrequin selon la revendication 1, caractérisé par le fait que le bout d'arbre comporte un profil extérieur (18) pour une clé entre son extrémité mâle (12) et sa partie réceptrice.

6. Bout d'arbre destiné à être monté sur une extrémité femelle d'un vilebrequin selon la revendication 1, caractérisé par le fait que le bout d'arbre (Z4) se présente sous la forme d'un arbre creux.

7. Bout d'arbre destiné à être monté sur une extrémité femelle d'un vilebrequin selon la revendication 1, caractérisé par le fait que le bout d'arbre (Z2) à son extrémité réceptrice, comporte un filetage intérieur (21) pour une vis de fixation.
